(19) **Europäisches Patentamt / European Patent Office / Office européen des brevets**

(11) **EP 2 179 149 B1**

(12) **FASCICULE DE BREVET EUROPEEN**

(45) Date de publication et mention de la délivrance du brevet:
**13.09.2017 Bulletin 2017/37**

(21) Numéro de dépôt: **08827863.5**

(22) Date de dépôt: **25.07.2008**

(51) Int Cl.:
*F01N 3/021* (2006.01)    *F01N 11/00* (2006.01)

(86) Numéro de dépôt international:
**PCT/FR2008/051407**

(87) Numéro de publication internationale:
**WO 2009/024702 (26.02.2009 Gazette 2009/09)**

(54) **PROCEDE ET DISPOSITIF DE DIAGNOSTIC DE L'ETAT DE FONCTIONNEMENT D'UNE LIGNE D'ECHAPPEMENT D'UN MOTEUR A COMBUSTION INTERNE**

VERFAHREN UND VORRICHTUNG ZUR DIAGNOSTIZIERUNG DES BETRIEBSSTATUS EINER ABGASLEITUNG EINES VERBRENNUNGSMOTORS

METHOD AND DEVICE FOR DIAGNOSING THE OPERATING STATE OF AN EXHAUST LINE OF AN INTERNAL COMBUSTION ENGINE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.08.2007 FR 0757117**

(43) Date de publication de la demande:
**28.04.2010 Bulletin 2010/17**

(73) Titulaire: **Renault S.A.S.**
**92100 Boulogne-Billancourt (FR)**

(72) Inventeurs:
• **THOUVENEL, Nicolas**
  **F-91610 Ballancourt Sur Essonne (FR)**
• **PRADEILLES, Cyril**
  **F-94370 Sucy En Brie (FR)**

(56) Documents cités:
**EP-A- 1 316 693     WO-A-2006/097646**
**WO-A-2006/111675    FR-A- 2 774 421**

**Description**

La présente invention concerne le domaine du traitement des gaz d'échappement d'un moteur à combustion interne, par exemple de véhicule automobile.

L'invention concerne plus particulièrement un procédé et un dispositif de diagnostic de l'état de fonctionnement d'une ligne d'échappement d'un tel moteur à combustion interne.

On cherche à l'heure actuelle à diminuer au maximum les émissions polluantes de moteurs à combustion interne utilisés dans les véhicules automobiles, et en particulier à réduire ou à éliminer l'émission de particules de suies par les moteurs Diesel afin de satisfaire aux normes anti-pollution.

A cet effet, on utilise généralement des moyens de régénération permettant de brûler périodiquement les particules piégées dans les filtres à particules, de manière à éviter le colmatage de ces derniers.

Ces filtres sont généralement associés à des dispositifs de diagnostic permettant de détecter les éventuels dysfonctionnements des moyens participant à l'élimination des particules.

La demanderesse a mis au point des dispositifs de diagnostic de l'état de fonctionnement d'une ligne d'échappement d'un moteur à combustion interne équipé d'un filtre à particules. On pourra à cet égard se référer aux demandes de brevet français FR-A-2 832 758 et FR-A-2 884 862.

Ces dispositifs de diagnostic comprennent des moyens de mesure d'une pression différentielle régnant entre l'amont et l'aval du filtre à particules, et une unité centrale pourvue de moyens de détection de points de fonctionnement stabilisés du moteur, de moyens d'évaluation d'un paramètre de diagnostic à partir de la valeur de la pression différentielle mesurée et de moyens de traitement du paramètre de diagnostic évalué pour la détection d'un dysfonctionnement du filtre à particules, lesdits moyens de traitement agissant en cas de fonctionnement stabilisé du moteur.

Ces dispositifs permettent ainsi de s'affranchir des phénomènes transitoires apparaissant notamment lors de fortes accélérations ou décélérations du moteur, ce qui engendrent généralement des bruits de mesure relativement importants pouvant générer une défaillance des diagnostics.

Ces dispositifs de diagnostic sont prévus pour la détection d'une pluralité de niveaux d'endommagement du filtre à particules afin de savoir s'il convient uniquement de procéder à une régénération, ou au contraire de prévoir son remplacement.

Toutefois, dans le cas où l'on souhaite déterminer un niveau d'endommagement plus fin du filtre à particules pour savoir si celui-ci est hors service ou non, de tels dispositifs se révèlent insuffisants.

La présente invention a donc pour but de remédier à cet inconvénient et de fournir un procédé et un dispositif de diagnostic aptes à détecter un niveau d'endommagement plus fin d'un filtre à particules monté sur la ligne d'échappement du moteur à combustion interne, et ce, de manière économique avec une fiabilité accrue.

A cet effet, le procédé de diagnostic de l'état de fonctionnement d'une ligne d'échappement d'un moteur à combustion interne équipée d'un filtre à particules comprend des étapes de mesure de pression, une étape de détection de points de fonctionnement stable, et une étape d'évaluation d'un paramètre de diagnostic à partir des valeurs de pression mesurées en cas de fonctionnement stable du moteur comprenant le calcul de la valeur de la moyenne glissante de mesures de pressions obtenues. Le document EP-A-1 316 693 décrit les caractéristiques du préambule de la revendication 1.

Selon un aspect de l'invention, l'étape de détection de points de fonctionnement stable du moteur comprend l'amenée des valeurs de charge moteur et de régime moteur de points de fonctionnement considérés à une cartographie mémorisée préétablie du régime moteur en fonction de la charge moteur, et la détermination des points de fonctionnement stable à partir de cette cartographie

Selon un aspect de ce procédé, l'étape d'évaluation du paramètre de diagnostic comprend la comparaison de ladite valeur de la moyenne glissante calculée avec une valeur seuil prédéterminée.

En effet, la demanderesse a déterminé que l'utilisation de la moyenne glissante comme paramètre de diagnostic de l'état de fonctionnement du filtre à particules permet de manière particulièrement simple et efficace d'obtenir la détection d'un dysfonctionnement du filtre en vue de son remplacement.

Par exemple, la moyenne glissante est élaborée à partir de la relation :

$$(\overline{P}_n) = \frac{\overline{P}_{n-1} \times (n-1) + P_n}{n}$$

dans laquelle les points n retenus sont choisis à l'intérieur d'une zone prédéfinie en termes de classes de débit des gaz d'échappement à l'intérieur du filtre.

Selon un exemple de mise en oeuvre, on détermine au moins la pression en amont du filtre à particules, on calcule la valeur du paramètre de diagnostic en continu pour chaque point de fonctionnement stable, on élabore un paramètre de diagnostic global à partir des paramètres de diagnostic de chaque point de fonctionnement, et l'on compare la valeur du paramètre de diagnostic global avec une unique valeur de seuil de détection d'un dysfonctionnement du filtre à particules de manière à déterminer l'état d'endommagement du filtre à particules.

Avantageusement, l'étape d'élaboration de diagnostic global comprend une sommation des paramètres de diagnostic respectifs des points de fonctionnement stable.

Dans un mode de mise en oeuvre, on mesure des pressions relatives en amont du filtre à particules. En variante, on peut encore mesurer des pressions différentielles aux bornes dudit filtre, ou mesurer des pressions absolues en amont du filtre à particules et la pression atmosphérique.

Selon l'invention, il est également proposé un dispositif de diagnostic de l'état de fonctionnement d'une ligne d'échappement d'un moteur à combustion interne équipée d'un filtre à particules, le dispositif comprenant des moyens de mesure de pression, une unité centrale pourvue de moyens de détection de points de fonctionnement stable du moteur, et de moyens d'évaluation d'un paramètre de diagnostic à partir des pressions mesurées.

Selon une caractéristique générale, le dispositif comprend en outre des moyens de calcul de la moyenne glissante de mesures de pression obtenues, une cartographie mémorisée préétablie du régime moteur en fonction de la charge dudit moteur, les moyens de détection étant aptes à déterminer les points de fonctionnement stable du moteur à partir de valeurs de charge moteur et de régime moteur de points de fonctionnement considérés amenées à la cartographie, et des moyens de comparaison de la valeur de la moyenne glissante calculée avec une valeur seuil prédéterminée.

Avantageusement, le dispositif comprend également des moyens de sommation des paramètres de diagnostic pour l'élaboration d'un paramètre de diagnostic global et des moyens de comparaison dudit paramètre de diagnostic global avec une valeur seuil de détection de dysfonctionnement du filtre à particules.

De préférence, les moyens de mesure comprennent un capteur de pression monté immédiatement en amont du filtre à particules.

Le dispositif de diagnostic peut avantageusement être utilisé dans un moteur Diesel.

L'invention sera mieux comprise à l'étude d'un mode de réalisation particulier, pris à titre d'exemple nullement limitatif et illustré par les dessins annexés, sur lesquels :

- la figure 1 est une vue schématique d'un moteur à combustion interne équipé d'une ligne d'échappement pourvue d'un filtre à particules associé à un dispositif de diagnostic selon l'invention ;
- la figure 2 représente l'évolution de la contre-pression à l'échappement de filtres à particules en fonction du débit volumique des gaz d'échappement, et
- la figure 3 illustre schématiquement les différentes étapes de fonctionnement du dispositif de diagnostic de la figure 1 ;

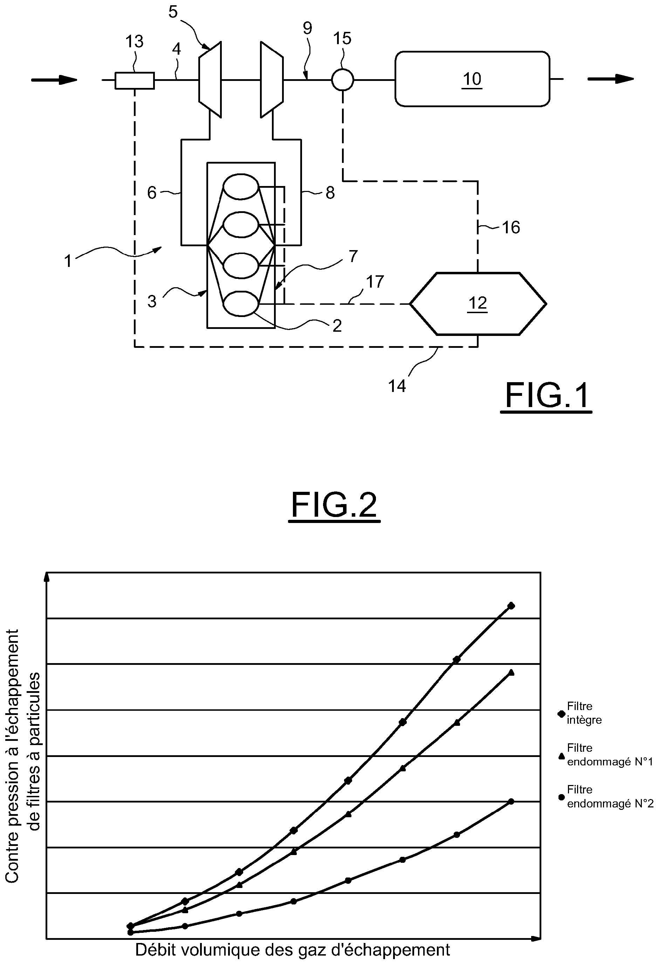

Sur la figure 1, on a représenté, de manière schématique, la structure générale d'un moteur à combustion interne, désigné par la référence numérique générale 1.

Dans l'exemple réalisé considéré, le moteur 1 est pourvu de quatre cylindres 2 en ligne. Bien entendu, il est également envisageable de prévoir un moteur 1 présentant un nombre différent de cylindres 2. Les cylindres 2 sont alimentés en air par l'intermédiaire d'un répartiteur d'admission 3, qui est alimenté par une conduite 4 pourvue d'un filtre à air (non représenté), et d'un turbocompresseur 5 de suralimentation en air. Le turbocompresseur 5 est relié au répartiteur d'admission 3 par l'intermédiaire d'une conduite 6.

Les cylindres 2 sont également reliés à un collecteur d'échappement 7 récupérant les gaz d'échappement issus de la combustion et évacuant ces derniers par l'intermédiaire d'une conduite 8 jusqu'au compresseur 5, lesdits gaz étant ensuite évacués vers l'extérieur par une ligne d'échappement 9 reliée au compresseur 5.

La ligne d'échappement 9 comprend un filtre à particules 10 adapté pour piéger les particules ou suies contenues dans les gaz d'échappement. De manière connue en soi, le filtre à particules 10 comporte des moyens, par exemple électrostatiques, pour piéger ces particules ou suies.

Bien entendu, il est également envisageable de prévoir en outre un catalyseur d'oxydation ou un piège à $NO_x$ (x=1 ou x=2) monté sur la ligne d'échappement 9 en amont du filtre à particules 10, en considérant le sens de circulation des gaz d'échappement.

Le moteur 1 est associé à une unité centrale 12 assurant le contrôle de fonctionnement dudit moteur, notamment le réglage de ses paramètres de fonctionnement, ainsi que le contrôle de fonctionnement du filtre à particules 10, et le diagnostic de son état de fonctionnement.

Pour procéder au contrôle du fonctionnement du moteur, celui-ci est pourvu essentiellement d'un capteur de débit 13 monté sur la conduite d'alimentation 4, en amont du turbocompresseur 5. Le capteur de débit 13 est raccordé à l'unité centrale 12, par l'intermédiaire d'une connexion référencée 14 illustrée schématiquement en pointillés.

En ce qui concerne le contrôle du fonctionnement du filtre à particules 10 ou, de manière générale, de la ligne d'échappement 9, et, en particulier, le diagnostic de son état de fonctionnement, celle-ci est pourvue d'un capteur de pression et de température 15 apte à mesurer la pression relative et la température en amont du filtre à particules 10. Le capteur de pression 15 est monté ici immédiatement en amont du filtre à particules 10.

Le capteur 15 est raccordé à l'unité centrale 12 par l'intermédiaire d'une connexion 16. L'unité centrale 12 reçoit également, par l'intermédiaire d'une connexion 17, des informations relatives au fonctionnement du moteur, par exemple le régime moteur $N_{mot}$ et la charge moteur $Ch_{mot}$.

L'unité centrale 12 comprend, stockés en mémoire, tous les moyens matériels et logistiques permettant de procéder au contrôle du fonctionnement du filtre à particules 10, en particulier à partir de la pression relative en amont du filtre à particules 10 détectée par le capteur 15, en calculant, à partir de cette valeur de pression, la valeur d'un paramètre de diagnostic et en traitant la valeur de ce paramètre pour détecter tout dysfonctionnement susceptible de se produire, comme cela va être décrit.

On va maintenant décrire, les principales étapes du procédé de diagnostic mises en oeuvre au sein de l'unité centrale 16. Le procédé selon l'invention se base sur le principe du diagnostic du niveau d'endommagement du filtre à particules. La figure 2 présente le tracé de la contre-pression à l'échappement de filtres à particules en fonction du débit volumique des gaz d'échappement dans la ligne d'échappement. Sur cette figure, on a représenté le tracé de cette pression pour un filtre à particules intègre, et des premier et second filtres endommagés. Le couple débit volumique-pression permet de différencier un filtre à particules intègre d'un filtre à particules endommagé. Le procédé de diagnostic selon la présente invention vise à diagnostiquer de façon fiable l'endommagement d'un filtre tel que celui illustré pour le premier filtre endommagé illustré sur cette figure.

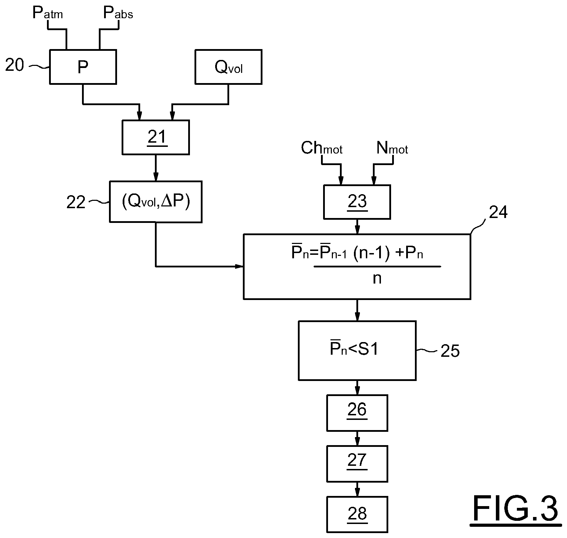

En se référant maintenant à la figure 3, pour procéder à la détection des points de fonctionnement stabilisés, on calcule, dans un premier temps, lors de l'étape 20, la valeur du débit volumique $Q_{vol}$ des gaz d'échappement dans le filtre à particules. Pour ce faire, on utilise la relation :

$$Q_{vol} = K \times (Q_{air} + \rho_{fuel} \times Q_{carb}) \times N \times \left( \frac{T_{amont}}{P_{amont}} \right)$$

dans laquelle :

K désigne une constante,
$Q_{air}$ représente le débit d'air massique mesuré par le débitmètre 13 (figure 1),
$\rho_{fuel}$ désigne la densité du gazole injectée,
$Q_{carb}$ désigne la quantité de gazole injectée,
N représente le régime du moteur,
$T_{amont}$ représente la température en amont du filtre à particules, et
$P_{amont}$ représente la pression absolue en amont du filtre à particules.

Parallèlement, au cours de cette étape 20, on acquiert la valeur P de la pression relative en amont du filtre à particules mesurée par le capteur 15.

Puis, lors de l'étape 21 suivante, on filtre la valeur P de la pression et la valeur du débit volumique $Q_{vol}$ calculée. On stocke alors dans des moyens de mémorisation, pendant l'étape 22, un couple $(Q_{vol}, P)$ de valeur de débit volumique déterminé des gaz d'échappement et de pression qui correspondent au point de fonctionnement retenu. On répertorie chaque couple $(Q_{vol}, P)$ en fonction de classes prédéterminées de débit volumique à l'intérieur du filtre à particules 10, par exemple 100-199 $m^3/h$, 200-299 etc ...

Parallèlement aux étapes 20 à 22, au cours d'une étape 23, on vérifie que le point de fonctionnement retenu correspond à un point de fonctionnement stabilisé du moteur. A cet égard, on amène les informations de charge moteur $Ch_{mot}$ et de régime moteur $N_{mot}$ à une cartographie mémorisée établie au préalable. Sur la cartographie mémorisée du régime moteur $N_{mot}$ en fonction de la charge moteur $Ch_{mot}$, il est établi, par apprentissages préalables, une plage de fonctionnement du moteur dans laquelle des points de fonctionnement sont considérés comme étant dans un état transitoire. A partir de la cartographie mémorisée, on détermine alors si le point de fonctionnement considéré est un point de fonctionnement stabilisé du moteur ou non.

Dans le cas où il est détecté que le point de fonctionnement considéré est un point de fonctionnement stabilisé pour le moteur, de manière à s'affranchir des bruits de mesure consécutifs aux phases transitoires, le procédé se poursuit alors par une phase de diagnostic de l'état de fonctionnement du filtre à particules.

Cette phase débute par une première étape 24, au cours de laquelle on élabore le paramètre de diagnostic de l'état de fonctionnement du filtre à particules. Ce paramètre de diagnostic est élaboré à partir de la relation suivante :

$$(\overline{P}_n) = \frac{\overline{P}_{n-1} \times (n-1) + P_n}{n}$$

$$\overline{P}_0 = P_0$$

dans laquelle $\overline{P}_n$ représente la valeur moyenne glissante de mesures de la pression obtenue par le capteur 15, pour un point n considéré.

On prend en compte un nombre n de points défini au préalable, ces points étant choisis à l'intérieur d'une même classe prédéterminée de débit volumique à l'intérieur du filtre à particules 10.

Lors de l'étape 25 suivante, on compare la valeur du paramètre de diagnostic $\overline{P}_n$ ainsi calculé avec une valeur de seuil SI prédéterminée. Dans le cas où le paramètre de diagnostic est inférieur à la valeur de seuil SI, on positionne à 1 une valeur binaire bi pour le point de fonctionnement i considéré, lors de l'étape 26.

Ensuite, lors de l'étape 27 suivante, on élabore un paramètre de diagnostic global pour l'ensemble des points de fonctionnement stable. Pour ce faire, on effectue la somme des valeurs binaires obtenues lors de l'étape 26.

On procède alors à un test par comparaison de la valeur de paramètres de diagnostic global avec un unique seuil de détection de dysfonctionnement du filtre à particules, lors de l'étape 28.

Ainsi, s'il est détecté, lors de cette étape 28, que le paramètre de diagnostic global est supérieur à la valeur seuil, on décide que le filtre à particules est endommagé et qu'il convient de procéder à son remplacement.

Grâce à l'invention, on dispose ainsi d'un procédé permettant de déterminer si le filtre à particules a conservé son intégrité ou au contraire s'il doit être remplacé, notamment par le calcul d'une moyenne de la contre-pression à l'échappement générée sur le filtre sur une classe prédéfinie de débit volumique traversant ledit filtre.

Bien que dans le mode de réalisation précédemment décrit, on procède à une détection de la pression relative en amont du filtre à particules pour diagnostiquer l'état d'endommagement de celui-ci, on conçoit également qu'il est également possible, sans sortir du cadre de la présente invention, de détecter l'endommagement par l'intermédiaire d'un capteur de pression différentielle, ou encore d'un capteur de pression absolue en amont du filtre à particules.

**Revendications**

1. Procédé de diagnostic de l'état de fonctionnement d'une ligne d'échappement d'un moteur à combustion interne équipée d'un filtre à particules, comprenant des étapes de mesure de pression, une étape de détection de points de fonctionnement stable du moteur, et une étape d'évaluation d'un paramètre de diagnostic à partir des valeurs de pression mesurées en cas de fonctionnement stable du moteur comprenant le calcul de la valeur de la moyenne glissante ($\overline{P}_n$) de mesures de pression obtenues, **caractérisé en ce que** l'étape de détection de points de fonctionnement stable du moteur comprend l'amenée des valeurs de charge moteur ($Ch_{mot}$) et de régime moteur ($N_{mot}$) de points de fonctionnement considérés à une cartographie mémorisée préétablie du régime moteur en fonction de la charge moteur, et la détermination des points de fonctionnement stable à partir de cette cartographie, et **en ce que** l'étape d'évaluation du paramètre de diagnostic comprend la comparaison de ladite valeur de la moyenne glissante calculée avec une valeur seuil (S1) prédéterminée.

2. Procédé selon la revendication 1, dans lequel la moyenne glissante ($\overline{P}_n$) est élaborée à partir de la relation :

$$(\overline{P}_n) = \frac{\overline{P}_{n-1} \times (n-1) + P_n}{n}$$

dans laquelle les points n retenus sont choisis à l'intérieur d'une zone prédéfinie en termes de classes de débit des gaz d'échappement à l'intérieur du filtre.

3. Procédé selon l'une quelconque des revendications précédentes, dans lequel on détermine au moins la pression en amont du filtre à particules, on calcule la valeur du paramètre de diagnostic en continu pour chaque point de fonctionnement stable, on élabore un paramètre de diagnostic global à partir des paramètres de diagnostic de chaque point de fonctionnement, et l'on compare la valeur du paramètre de diagnostic global avec une unique valeur de seuil de détection d'un dysfonctionnement du filtre à particules de manière à déterminer l'état d'endommagement du filtre à particules.

4. Procédé selon la revendication 3, **caractérisé en ce que** l'étape d'élaboration de diagnostic global comprend une sommation des paramètres de diagnostic respectifs des points de fonctionnement stable.

**5.** Procédé selon l'une quelconque des revendications précédentes, dans lequel on mesure des pressions relatives en amont du filtre à particules.

**6.** Procédé selon l'une quelconque des revendications 1 à 4, dans lequel on mesure des pressions différentielles aux bornes du filtre à particules.

**7.** Procédé selon l'une quelconque des revendications 1 à 4, dans lequel on mesure des pressions absolues en amont du filtre à particules et la pression atmosphérique.

**8.** Dispositif de diagnostic de l'état de fonctionnement d'une ligne d'échappement d'un moteur à combustion interne équipée d'un filtre à particules (10), comprenant des moyens de mesure (15) de pression, une unité centrale (12) pourvue de moyens de détection de points de fonctionnement stable du moteur, de moyens d'évaluation d'un paramètre de diagnostic à partir des pressions mesurées, et de moyens de calcul de la moyenne glissante ($\overline{P}_n$) de mesures de pression obtenues, **caractérisé en ce qu'**il comprend en outre une cartographie mémorisée préétablie du régime moteur en fonction de la charge dudit moteur, les moyens de détection étant aptes à déterminer les points de fonctionnement stable du moteur à partir de valeurs de charge moteur ($Ch_{mot}$) et de régime moteur ($N_{mot}$) de points de fonctionnement considérés amenées à la cartographie, et des moyens de comparaison de ladite valeur de la moyenne glissante calculée avec une valeur seuil (S1) prédéterminée.

**9.** Dispositif selon la revendication 8, comprenant des moyens de sommation des paramètres de diagnostic pour l'élaboration d'un paramètre de diagnostic global et des moyens de comparaison dudit paramètre de diagnostic global avec une valeur seuil de détection de dysfonctionnement du filtre à particules.

**10.** Dispositif selon la revendication 8 ou 9, dans lequel les moyens de mesure (15) comprennent un capteur de pression monté immédiatement en amont du filtre à particules (18).

**11.** Utilisation d'un dispositif de diagnostic selon l'une quelconque des revendications 8 à 10 dans un moteur Diesel.

## Patentansprüche

**1.** Verfahren zur Diagnostizierung des Betriebszustands einer Abgasleitung eines Verbrennungsmotors, die mit einem Partikelfilter ausgestattet ist, umfassend Schritte des Druckmessens, einen Schritt des Ermittelns von Punkten stabilen Betriebs des Motors und einen Schritt des Beurteilens eines Diagnoseparameters ausgehend von den gemessenen Druckwerten bei stabilem Betrieb des Motors, umfassend das Berechnen des gleitenden Mittelwerts ($\overline{P}_n$) von erhaltenen Druckmessungen, **dadurch gekennzeichnet, dass** der Schritt des Ermittelns von Punkten stabilen Betriebs des Motors das Zuführen der Werte der Motorbelastung ($Ch_{mot}$) und der Motordrehzahl ($N_{mot}$) von betrachteten Betriebspunkten zu einer vorbestimmten gespeicherten Kartographie der Motordrehzahl in Abhängigkeit von der Motorbelastung und das Bestimmen der Punkte stabilen Betriebs ausgehend von dieser Kartographie aufweist, und dass der Schritt des Beurteilens des Diagnoseparameters das Vergleichen des gleitenden Mittelwerts, der mit einem vorbestimmten Schwellenwert (S1) berechnet wird, aufweist.

**2.** Verfahren nach Anspruch 1, wobei der gleitende Mittelwert ($\overline{P}_n$) aus der folgenden Gleichung gebildet wird:

$$(\overline{P}_n) = \frac{\overline{P}_{n-1} \times (n-1) + P_n}{n} \; ,$$

wobei die untersuchten Punkte n innerhalb eines vorbestimmten Bereichs in Bezug auf Klassen des Abgasdurchflusses innerhalb des Filters ausgewählt werden.

**3.** Verfahren nach einem der vorhergehenden Ansprüche, wobei mindestens der Druck vorgelagert vor dem Partikelfilter bestimmt wird, der Wert des Diagnoseparameters kontinuierlich für jeden Punkt stabilen Betriebs berechnet wird, ein globaler Diagnoseparameter aus den Diagnoseparametern von jedem Betriebspunkt erstellt wird und der Wert des globalen Diagnoseparameters mit einem einzigen Schwellenwert des Entdeckens von einer Funktionsstörung des Partikelfilters derart verglichen wird, um den Beschädigungszustand des Partikelfilters zu bestimmen.

4. Verfahren nach Anspruch 3, **dadurch gekennzeichnet, dass** der Schritt des Erstellens der globalen Diagnostizierung eine Summierung der jeweiligen Diagnoseparameter der Punkte stabilen Betriebs aufweist.

5. Verfahren nach einem der vorhergehenden Ansprüche, wobei jeweilige Drücke vorgelagert vor dem Partikelfilter gemessen werden.

6. Verfahren nach einem der Ansprüche 1 bis 4, wobei Differenzdrücke an den Anschlüssen des Partikelfilters gemessen werden.

7. Verfahren nach einem der Ansprüche 1 bis 4, wobei absolute Drücke vorgelagert vor dem Partikelfilter und der Luftdruck gemessen werden.

8. Vorrichtung zur Diagnostizierung des Betriebszustands einer Abgasleitung eines Verbrennungsmotors, die mit einem Partikelfilter (10) ausgestattet ist, umfassend Mittel zum Druckmessen (15), eine Zentraleinheit (12), die mit Mitteln zum Ermitteln von Punkten stabilen Betriebs des Motors, Mitteln zum Beurteilen eines Diagnoseparameters ausgehend von den gemessenen Druckwerten und Mitteln zum Berechnen des gleitenden Mittelwerts ($\overline{P}_n$) von erhaltenen Druckmessungen versehen ist, **dadurch gekennzeichnet, dass** sie ferner eine vorbestimmte gespeicherte Kartographie der Motordrehzahl in Abhängigkeit von der Motorbelastung aufweist, wobei die Mittel zum Ermitteln geeignet sind, die Punkte stabilen Betriebs des Motors ausgehend von Werten der Motorbelastung ($Ch_{mot}$) und der Motordrehzahl ($N_{mot}$) von betrachteten Betriebspunkten, die zu der Kartographie zugeführt sind, zu bestimmen, und Mittel zum Vergleichen des gleitenden Mittelwerts, der mit einem vorbestimmten Schwellenwert (S1) berechnet wird.

9. Vorrichtung nach Anspruch 8, umfassend Mittel zum Summieren der Diagnoseparameter zum Erstellen eines globalen Diagnoseparameters und Mittel zum Vergleichen des globalen Diagnoseparameters mit einem Schwellenwert des Entdeckens von einer Funktionsstörung des Partikelfilters.

10. Vorrichtung nach Anspruch 8 oder 9, wobei die Mittel zum Messen (15) einen Drucksensor aufweisen, der direkt vorgelagert vor dem Partikelfilter (18) befestigt ist.

11. Verwendung von einer Vorrichtung zur Diagnostizierung nach einem der Ansprüche 8 bis 10 in einem Dieselmotor.

## Claims

1. Method for diagnosing the operating state of an exhaust line of an internal combustion engine which line is equipped with a particle filter, comprising steps of measuring pressure, a step of detecting stable engine operating points, and a step of evaluating a diagnostics parameter from the pressure values measured if the engine is operating stably, involving calculating the value of the sliding mean ($\overline{P}_n$) of pressure measurements obtained, **characterized in that** the step of detecting stable engine operating points involves bringing the engine load ($Ch_{mot}$) and engine speed ($N_{mot}$) values of operating points considered to a pre-established map stored in memory of engine speed as a function of engine load and determining stable operating points from this map, and **in that** the step of evaluating the diagnostics parameter involves comparing the said calculated sliding mean value against a predetermined threshold value (S1).

2. Method according to Claim 1, in which the sliding mean ($\overline{P}_n$) is formulated from the relationship:

$$(\overline{P}_n) = \frac{\overline{P}_{n-1} \times (n-1) + P_n}{n}$$

in which the points n adopted are chosen to lie inside a predefined zone in terms of classes of flow rate of exhaust gases inside the filter.

3. Method according to either one of the preceding claims, in which at least the pressure upstream of the particle filter is determined, the value of the diagnostics parameter is calculated continuously for each stable operating point, an overall diagnostics parameter is formulated from the diagnostics parameters for each operating point, and the value of the overall diagnostics parameter is compared against a single threshold value for the detection of a malfunction of the particle filter so as to determine the state of damage of the particle filter.

4. Method according to Claim 3, **characterized in that** the step of formulating the overall diagnosis involves summing the respective diagnostics parameters for the stable operating points.

5. Method according to any one of the preceding claims, in which gauge pressures upstream of the particle filter are measured.

6. Method according to any one of Claims 1 to 4, in which differential pressures across the particle filter are measured.

7. Method according to any one of Claims 1 to 4, in which absolute pressures upstream of the particle filter and atmospheric pressure are measured.

8. Device for diagnosing the state of operation of an exhaust line of an internal combustion engine which line is equipped with a particle filter (10), comprising pressure measuring means (15), a central unit (12) provided with means of detecting stable engine operating points, with means of evaluating a diagnostics parameter from the pressures measured, and with means of calculating the sliding mean ($\overline{P}_n$) of pressure measurements obtained, **characterized in that** it further comprises a pre-established map of engine speed as a function of engine load stored in memory, the detection means being able to determine the stable engine operating points from engine load ($Ch_{mot}$) and engine speed ($N_{mot}$) values of operating points considered referred to the map, and from means of comparing the said calculated value of the sliding mean against a predetermined threshold value (S1).

9. Device according to Claim 8, comprising means of summing the diagnostics parameters in order to formulate an overall diagnostics parameter and means of comparing the said overall diagnostics parameter against a threshold value for detecting the malfunctioning of the particle filter.

10. Device according to Claim 8 or 9, in which the measurement means (15) comprise a pressure sensor mounted immediately upstream of the particle filter (18).

11. Use of a diagnostics device according to any one of Claims 8 to 10 in a diesel engine.

# FIG.1

# FIG.2

Contre pression à l'échappement de filtres à particules

Débit volumique des gaz d'échappement

Filtre intègre

Filtre endommagé N°1

Filtre endommagé N°2

$P_{atm}$   $P_{abs}$

20 ⎯ | P |   | $Q_{vol}$ |

| 21 |

22 ⎯ | $(Q_{vol}, \Delta P)$ |

$Ch_{mot}$   $N_{mot}$

| 23 |

24

$$\overline{P}_n = \frac{\overline{P}_{n-1}\,(n-1) + P_n}{n}$$

| $\overline{P}_n < S1$ | ⎯ 25

| 26 |

| 27 |

| 28 |

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2832758 A
- FR 2884862 A
- EP 1316693 A